# DEMANDE DE BREVET EUROPEEN

(11) **EP 3 106 955 A1**
(43) Date de publication de la demande: **21.12.2016**
(21) Numéro de dépôt: 16171242.7
(22) Date de dépôt: 25.05.2016
(51) Int. Cl.: G05D 7/01, G05D 16/10

(54) **RÉGULATEUR DE DÉBIT D'UN FLUX DE GAZ**

(30) Priorité: 05.06.2015 FR 1555133
(71) Demandeur: Air Liquide Medical Systems, 92160 Antony (FR)
(72) Inventeur: BOURQUIN, Amélie, 75014 Paris (FR); CHAFFARD, Denis, 01170 Gex (FR); DUTHEIL, Benjamin, 75002 Paris (FR); HARANT, Catherine, 78370 Plaisir (FR)
(74) Mandataire: De Cuenca, Emmanuel Jaime

(57) **Abrégé**

Régulateur de débit d'un flux de gaz, comprenant au moins un organe (7, 8) réglable de régulation de débit pour régler le débit du gaz admis à circuler, le régulateur (1) comprenant en outre un sélecteur (9) de débit manuel monté mobile sur le corps (2) et coopérant avec l'organe (7, 8) de régulation pour commander la consigne de débit imposé par ledit organe (7, 8) de régulation, le sélecteur (9) de débit étant mobile sur le corps (2) selon une pluralité de positions distinctes correspondant à des débits respectifs, le régulateur (1) comprenant au moins un indicateur visuel d'un débit de gaz délivré par le régulateur, caractérisé en ce qu'il comporte une chambre (10) de visualisation disposée sur le circuit (3) de gaz, ladite chambre (10) de visualisation étant traversée par le gaz qui s'écoule vers la seconde extrémité (5), et abritant un organe (11) indicateur monté mobile dans la chambre (10), l'organe (11) indicateur étant monté dans la chambre (10) de visualisation de façon à se déplacer sous l'action d'un flux de gaz traversant ladite chambre (10), la chambre (10) comprenant en outre une fenêtre transparente ou translucide permettant d'observer le mouvement de l'organe (11) indicateur depuis l'extérieur du régulateur (1).

## Description

La présente invention concerne régulateur de débit d'un flux de gaz.

L'invention concerne plus particulièrement un régulateur de débit d'un flux de gaz, comprenant un corps abritant un circuit de gaz ayant une première extrémité amont débouchant sur le corps u niveau d'un raccord d'entrée comprenant des organes d'accrochage destiné à permettre l'accrochage amovible du régulateur sur une source de gaz sous pression et une seconde extrémité débouchant au niveau d'un raccord de sortie de gaz, le circuit comprenant au moins un organe réglable de régulation de débit pour régler le débit du gaz admis à circuler dans le circuit de la première extrémité vers la seconde extrémité, le régulateur comprenant en outre un sélecteur de débit manuel monté mobile sur le corps et coopérant avec l'organe de régulation pour commander la consigne de débit imposé par ledit organe de régulation, le sélecteur de débit étant mobile sur le corps selon une pluralité de positions distinctes correspondant à des débits respectifs imposés par l'organe de régulation dont au moins une position correspondant à un débit nul et au moins une position correspondant à un débit non nul déterminé, le régulateur comprenant au moins un indicateur visuel d'un débit de gaz délivré par le régulateur.

L'invention concerne plus particulièrement les dispositifs de détente et de régulation de débit de gaz pour applications médicales. De tels dispositifs, parfois appelés simplement « débitmètres » sont prévus pour être raccordés en amont à une source de gaz sous pression (une prise murale d'un hôpital par exemple) et abaisser la pression du gaz et réguler son débit en vue d'alimenter en aval le patient (via un masque ou une lunette d'aide à la respiration par exemple).

Généralement, un tel régulateur possède un sélecteur rotatif actionné manuellement qui commande un système de régulation de débit à orifices calibrés. Le sélecteur comprend généralement une graduation indiquant le débit sélectionné.

On pourra se référer par exemple au produit « SELECTAFLO »® commercialisé par la société Air Liquide Medical Systems.

Un problème rencontré par certains utilisateurs (personnels soignants) de ces dispositifs est qu'il est parfois difficile de connaître l'état du régulateur lorsque celui-ci est branché sur une prise murale et relié à un patient. En effet, le fait qu'une position de débit soit indiquée par la position du sélecteur n'est parfois pas suffisant pour des équipes médicales qui, de loin, n'ont pas l'assurance que le gaz est effectivement délivré au patient.

Une solution utilisée pour des débitmètres à bille utilise une bille, en suspension à l'intérieur d'un tube gradué en fonction du flux de gaz réglé, qui indique le débit sélectionné. Cette solution est complexe et nécessite de positionner le débitmètre dans une position déterminée pour ne pas fausser le fonctionnement et la lecture.

Le document EP2211247A1 décrit un régulateur comprenant un indicateur activé électriquement. Plus précisément, le régulateur intègre un système dit optoélectronique dans lequel le flux de gaz génère une différence de pression qui actionne un système pneumatique transmettant l'information à une diode.

Ce système, outre les problèmes de fiabilité, nécessite une alimentation électrique.

Un but de la présente invention est de pallier tout ou partie des inconvénients de l'art antérieur relevés ci-dessus.

A cette fin, le régulateur de débit selon l'invention, par ailleurs conforme à la définition générique qu'en donne le préambule ci-dessus, est essentiellement caractérisé en ce qu'il comporte une chambre de visualisation disposée sur le circuit de gaz, ladite chambre de visualisation étant traversée par le gaz qui s'écoule vers la seconde extrémité, et abritant un organe indicateur monté mobile dans la chambre, l'organe indicateur étant monté dans la chambre de visualisation de façon à se déplacer sous l'action d'un flux de gaz traversant ladite chambre, la chambre comprenant en outre une fenêtre transparente ou translucide permettant d'observer le mouvement de l'organe indicateur depuis l'extérieur du régulateur.

Par ailleurs, des modes de réalisation de l'invention peuvent comporter l'une ou plusieurs des caractéristiques suivantes :
- l'organe indicateur est situé dans le flux de gaz qui s'écoule vers la seconde extrémité et est mis en mouvement continument par un tel flux de gaz lorsque le débit de gaz excède un seuil déterminé,
- l'organe indicateur est immobile ou quasi immobile lorsque qu'aucun flux de gaz ne traverse ladite chambre et que le régulateur est immobile,
- l'organe indicateur est monté mobile en rotation dans la chambre de visualisation,
- l'organe indicateur comprend une roue monté mobile en rotation sur elle-même dans la chambre de visualisation,
- l'organe indicateur comprend une surface périphérique extérieure munie de portions ayant des teintes ou des couleurs respectives distinctes,
- la vitesse de déplacement de l'organe indicateur dans la chambre varie en fonction du débit de flux de gaz traversant ladite chambre,
- les portions de teintes ou de couleurs respectives de la surface périphérique de l'organe indicateur produisent une couleur ou une teinte visible différente selon la vitesse de déplacement de l'organe indicateur dans la chambre,
- la chambre de visualisation est disposée entre le sélecteur (9) et le raccord de sortie,
- la chambre de visualisation est disposée entre l'organe de régulation et le raccord de sortie,
- l'organe réglable de régulation de débit comprend un système à orifices calibrés actionné par le sélecteur.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective, schématique et partielle, illustrant un exemple de régulateur de débit selon un exemple de réalisation possible de l'invention,
- la figure 2 représente une vue en perspective, schématique et partielle, illustrant un détail du régulateur de débit de la figure 1,
- la figure 3 représente une vue en coupe longitudinale, schématique et partielle, du détail la figure 1.

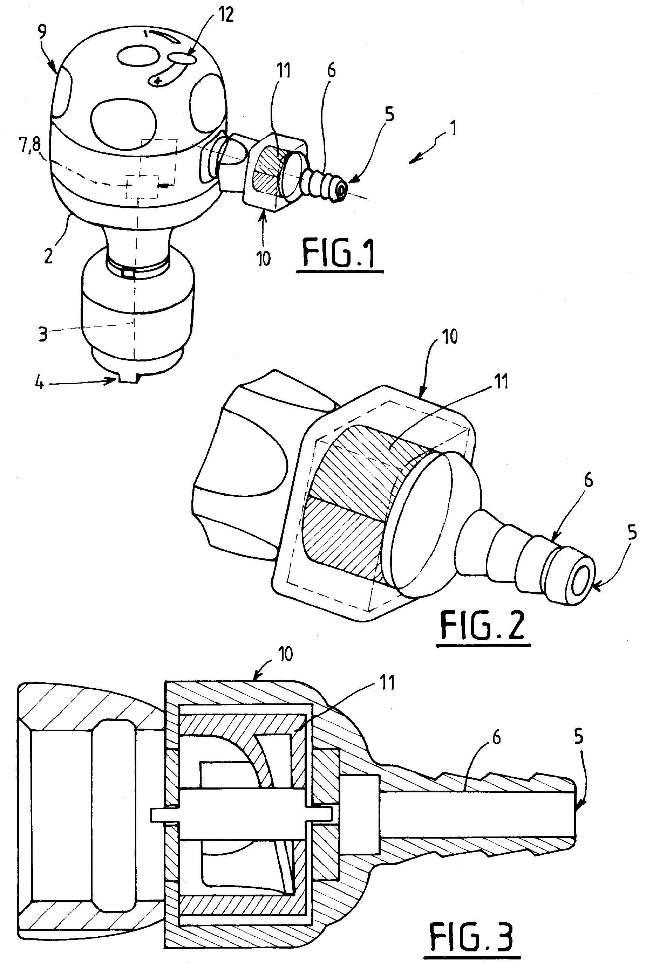

Le régulateur 1 de débit illustré à la figure 1 comprend un corps 2 allongé (par exemple en forme de champignon) abritant un circuit 3 de gaz.

Le circuit 3 a une première extrémité amont 4 débouchant sur le corps 2 au niveau d'une première extrémité munie un raccord d'entrée de gaz.

Ce raccord d'entrée comprend par exemple des organes d'accrochage (connexion rapide) destiné à permettre l'accrochage amovible du régulateur 1 sur une source de gaz sous pression (par exemple au niveau d'un orifice d'une prise murale de gaz).

Le circuit 3 comprend une deuxième extrémité aval 5 débouchant au niveau d'une autre extrémité du corps 2, au niveau d'un raccord 6 de sortie de gaz (appelé parfois également « olive »). Ce raccord 6 de sortie peut être agencé transversalement au reste du corps 2.

Le régulateur 1 comprend dans le corps au moins un organe 7, 8 réglable de régulation du débit et éventuellement de régulation de pression, pour régler le débit du gaz admis à circuler dans le circuit 3 de la première extrémité 4 vers la seconde extrémité 5.

L'organe 7, 8 réglable de régulation peut comprendre au moins l'un parmi : un détendeur de pression permettant d'abaisser la pression à un niveau déterminé, un système de réglage de débit à orifices calibrés.

Le régulateur 1 comprend en outre un sélecteur 9 de débit manuel monté mobile (de préférence en rotation) sur le corps 2. Le sélecteur 9 coopère avec l'organe 7, 8 de régulation pour commander sélectivement la consigne de débit imposée par ledit organe 7, 8 de régulation. C'est-à-dire que le sélecteur 9 de débit est mobile sur le corps 2 selon une pluralité de positions distinctes correspondant à des débits respectifs imposés par l'organe 7, 8 de régulation dont au moins une position correspondant à un débit nul et au moins une position correspondant à un débit non nul déterminé.

A cet effet, le sélecteur 9 peut coopérer avec un système de graduation 12 affichant le débit sélectionné.

Selon une particularité, le régulateur 1 comporte en outre une chambre 10 de visualisation disposée sur le circuit 3 de gaz. Cette chambre 10 de visualisation est traversée le gaz qui est admis à s'écouler vers la seconde extrémité 5.

Cette chambre abrite un organe 11 indicateur monté mobile dans la chambre 10. L'organe 11 indicateur étant monté dans la chambre 10 de visualisation de façon à se déplacer sous l'action d'un flux de gaz traversant ladite chambre 10. De plus, la chambre 10 comprend en outre une fenêtre transparente ou translucide permettant d'observer la position et le mouvement de l'organe 11 indicateur depuis l'extérieur du régulateur.

Ceci permet à un utilisateur de visualiser qu'un débit de fluide médical est bien délivré au patient. En effet, le déplacement de l'organe 11 indicateur est visible à quelques mètres et confirme sans équivoque l'écoulement du gaz vers le raccord 6 de sortie.

En effet, l'organe 11 indicateur est situé dans le flux de gaz qui s'écoule vers la seconde extrémité 5 et est mis en mouvement par un tel flux de gaz lorsque le débit de gaz excède un seuil déterminé. Dans le cas contraire (pas de flux de gaz), l'organe indicateur 11 est immobile.

De préférence l'organe 11 indicateur mobile en rotation dans la chambre 10 de visualisation.

Comme illustré, l'organe 11 indicateur peut comprendre une roue monté mobile en rotation sur elle-même dans la chambre 10 de visualisation.

Par exemple, la roue 11 possède axe de rotation parallèle au sens d'écoulement du gaz (bien entendu cet axe de rotation pourrait être perpendiculaire ou incliné par rapport au flux de gaz.

De même, comme illustré, la roue 11 peut comporter un moyeu central et une paroi périphérique concentrique sensiblement cylindrique. La paroi périphérique peut être reliée au moyeu central via des pales incurvées (cf. figure 3).

Comme illustré aux figures 1 et 2, la surface périphérique extérieure de la roue11 peut être munie de portions de teintes ou des couleurs respectives distinctes. Ceci rend encore plus facile la perception de sa mobilité (très utile dans une chambre d'hôpital ou un véhicule de secours).

Cette indication visuelle fiable ne nécessite pas d'énergie électrique.

De plus, la vitesse de rotation de la roue 11, qui est directement liée au débit, peut donner une indication du niveau de celui-ci, notamment via un jeu de couleurs, qui, selon la vitesse de mise en mouvement de la roue sera perçu différemment. C'est -à-dire que la couleur ou la nuance de couleur vue sera différente de l'état immobile et le cas échéant différente selon la vitesse de mouvement.

Comme illustré, cette indicateur (chambre 10 comprenant la roue 11) peut être solidaire ou intégrée au raccord 6 de sortie (olive) ou au niveau d'un embout de sortie du corps du régulateur 1. Cet embout peut être le composant qui relie le corps du débitmètre au raccord 6 de sortie.

## Revendications

1. Régulateur de débit d'un flux de gaz, comprenant un corps (2) abritant un circuit (3) de gaz ayant une première extrémité amont (4) débouchant sur le corps (2) au niveau d'un raccord d'entrée comprenant des organes d'accrochage destiné à permettre l'accrochage amovible du régulateur (1) sur une source de gaz sous pression et une seconde extrémité (5) débouchant au niveau d'un raccord (6) de sortie de gaz, le circuit (3) comprenant au moins un organe (7, 8) réglable de régulation de débit pour régler le débit du gaz admis à circuler dans le circuit (3) de la première extrémité (4) vers la seconde extrémité (5), le régulateur (1) comprenant en outre un sélecteur (9) de débit manuel monté mobile sur le corps (2) et coopérant avec l'organe (7, 8) de régulation pour commander la consigne de débit imposé par ledit organe (7, 8) de régulation, le sélecteur (9) de débit étant mobile sur le corps (2) selon une pluralité de positions distinctes correspondant à des débits respectifs imposés par l'organe (7, 8) de régulation dont au moins une position correspondant à un débit nul et au moins une position correspondant à un débit non nul déterminé, le régulateur (1) comprenant au moins un indicateur visuel d'un débit de gaz délivré par le régulateur, **caractérisé en ce qu'**il comporte une chambre (10) de visualisation disposée sur le circuit (3) de gaz, ladite chambre (10) de visualisation étant traversée par le gaz qui s'écoule vers la seconde extrémité (5), et abritant un organe (11) indicateur monté mobile dans la chambre (10), l'organe (11) indicateur étant monté dans la chambre (10) de visualisation de façon à se déplacer sous l'action d'un flux de gaz traversant ladite chambre (10), la chambre (10) comprenant en outre une fenêtre transparente ou translucide permettant d'observer le mouvement de l'organe (11) indicateur depuis l'extérieur du régulateur (1).

2. Régulateur selon la revendication 1, **caractérisé en ce que** l'organe (11) indicateur est situé dans le flux de gaz qui s'écoule vers la seconde extrémité (5) et est mis en mouvement continument par un tel flux de gaz lorsque le débit de gaz excède un seuil déterminé.

3. Régulateur selon la revendication 1 ou 2, **caractérisé en ce que** l'organe (11) indicateur est immobile ou quasi immobile lorsque qu'aucun flux de gaz ne traverse ladite chambre (10) et que le régulateur (1) est immobile.

4. Régulateur selon l'une quelconque des revendications 1 à 3, **caractérisé en ce que** l'organe (11) indicateur est monté mobile en rotation dans la chambre (10) de visualisation.

5. Régulateur selon l'une quelconque des revendications 1 à 4, **caractérisé en ce que** l'organe (11) indicateur comprend une roue monté mobile en rotation sur elle-même dans la chambre (10) de visualisation.

6. Régulateur selon l'une quelconque des revendications 1 à 5, **caractérisé en ce que** l'organe (11) indicateur comprend une surface périphérique extérieure munie de portions ayant des teintes ou des couleurs respectives distinctes.

7. Régulateur selon l'une quelconque des revendications 1 à 6, **caractérisé en ce que** la vitesse de déplacement de l'organe (11) indicateur dans la chambre (10) varie en fonction du débit de flux de gaz traversant ladite chambre (10).

8. Régulateur selon les revendications 6 et 7 prises en combinaison, **caractérisé en ce que** les portions de teintes ou de couleurs respectives de la surface périphérique de l'organe (11) indicateur produisent une couleur ou une teinte visible différente selon la vitesse de déplacement de l'organe (11) indicateur dans la chambre (10).

9. Régulateur selon l'une quelconque des revendications 1 à 8, **caractérisé en ce que** la chambre (10) de visualisation est disposée entre le sélecteur (9) et le raccord (6) de sortie.

10. Régulateur selon l'une quelconque des revendications 1 à 9, **caractérisé en ce que** la chambre (10) de visualisation est disposée entre l'organe (7, 8) de régulation et le raccord (6) de sortie.

11. Régulateur selon l'une quelconque des revendications 1 à 10, **caractérisé en ce que** l'organe (7, 8) réglable de régulation de débit comprend un système à orifices calibrés actionné par le sélecteur (9).
